**Europäisches Patentamt**

**European Patent Office**

**Office européen des brevets**

(19)

(11) **EP 1 258 816 A2**

(12) **EUROPEAN PATENT APPLICATION**

(43) Date of publication:
**20.11.2002 Bulletin 2002/47**

(51) Int Cl.⁷: **G06F 17/30**

(21) Application number: **02006608.0**

(22) Date of filing: **22.03.2002**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | (72) Inventor: **Kim, Hyeon Jun**<br>**Sungnam-si, Gyunggi-do (KR)** |
| (30) Priority: **26.03.2001 KR 2001015692** | (74) Representative: **Vetter, Ewald Otto et al**<br>**Meissner, Bolte & Partner**<br>**Anwaltssozietät GbR**<br>**(Depotstrasse 5 1/2,**<br>**86199 Augsburg),** |
| (71) Applicant: **LG ELECTRONICS INC.**<br>**Seoul (KR)** | **Postfach 10 26 05**<br>**86016 Augsburg (DE)** |

(54) **Image search method and apparatus**

(57)     An image search method comprising the step of searching for a desired image to be found, on the basis of an image created by a user as a query image, the step of allowing the user to select one or more images similar to the desired image from among search results for the desired image, and the step of designating the selected similar images as query images and re-searching for the desired image on the basis of the designated query images.

Fig. 1

## Description

BACKGROUND OF THE INVENTION

Field of the Invention

The present invention relates to a contents-based multimedia search system, and more particularly to an image search method and apparatus for sequentially applying different types of query methods to a contents-based image search system to more efficiently perform a contents-based image search operation.

Description of the Related Art

Recently, a contents-based multimedia search has been recognized to be very important in that it overcomes the limitations of a keyword search and provides a natural search method to persons, and many studies thereof have thus been reported. In particular, with the increasing use of the Internet, an image search has become more important and been very usefully used in a digital library, etc. A contents-based image search signifies analyzing image feature information, such as colors or textures, and finding and providing similar images as a result of the analysis when persons have viewed multimedia contents with their eyes. A variety of feature information has been studied and reported for better performance of the contents-based image search. For this reason, commercially available software packages with a contents-based image search function have been developed and sold.

Most of such image searchers require a user to first select a query image to search for a desired image to be found. One such image searcher compares the query image selected by the user with images stored in an image database including the desired image to be found, on the basis of image feature information, and then shows the user images most similar to the desired image, among the stored images, as search results.

However, it is the current reality that the search results are not sufficiently high in level as to satisfy the user, because most of the images stored in the image database may be different in their important feature information exhibiting similarities to the desired image to be found.

In order to settle the above problem, there has been proposed a method wherein a user feeds information regarding images similar to a specific image to be found, back to a search system on the basis of primary search results (this is a so-called relevance feedback function) to enable the search system to automatically calculate which feature information is more important to the search for the specific image. It has been reported that this method provides significantly improved image search performance.

In all the above-mentioned techniques, a user must first select a query image similar to a specific image to search for the specific image. A general query image selection method is to arrange images at random and allow a user to select any one of the arranged images as a query image. In this method, it is not easy for the user to select an appropriate query image from among the randomly arranged images. Rather, the user has to conduct the search for the appropriate query image several times for selection thereof.

In order to solve such a problem, there has been proposed a method wherein a user personally creates a query image rather than selects it, and searches for a desired image on the basis of the created query image. That is, in this method, the user creates an image reflecting feature information of a specific image to be found, through the use of a simple image creation tool, and then searches for the specific image by using the created image as a query image.

However, in this method, the user cannot help creating a simple query image, because he/she has difficulties in creating such a detailed query image as to sufficiently reflect feature information of a specific image to be found. Further, only limited image feature information can be used for the search for such a query image. For example, texture information is hard for the user to create and express. For this reason, such feature information is difficult not only to be reflected in a query image to be created by the user, but also to be used. In this regard, the above method has a disadvantage in that search performance is not satisfactorily high because a search operation based on only limited feature information is performed.

On the other hand, a keyword-based search method is a representative, easy query method for performing the search for an image by a user. In the keyword-based search method, features of each image are described as texts (keywords) and, if the user enters a keyword associated with or expressing a desired image to be found, images having keywords matched with the entered keyword are searched and shown to the user as search results.

However, the keyword-based search method can provide proper search performance only when a keyword considered by the user is correctly entered as a keyword of an image to be found. In this connection, it is very hard to find a desired image on the basis of only a keyword. Namely, even in the case where different persons desire to search for multimedia data of the same contents, they may use different words, sentences, descriptions, etc. associated with or expressing the multimedia data, respectively, thereby making it very difficult to find a desired image with only a keyword. Furthermore, since a keyword is expressed by different languages in respective nations, the keyword-based search method is subject to serious limitations unless it is supported with a multilanguage system, resulting in a degradation in practical use except for specific applications.

## SUMMARY OF THE INVENTION

Therefore, the present invention has been made in view of the above problems, and it is an object of the present invention to provide an image search method and apparatus for overcoming problems with a conventional contents-based image search method and enabling a user to more easily conduct a search.

It is another object of the present invention to provide a base capable of integrating different query-search modules in a contents-based multimedia search system, more particularly an Internet-based video search system.

It is yet another object of the present invention to provide an image search system for performing an image search operation by hierarchically and sequentially combining and applying different types of query data, such as a general query image, a query image created by a user and a keyword.

In accordance with the present invention, an image search system employs a query method based on a sketch selected by a user, text information or the combination of the sketch and text information.

In one embodiment of the present invention, the image search system is adapted to allow the user to create a query image, perform a rough search based on the created query image, select one or more query images from among results of the rough search and perform a re-search based on the selected query images.

In another embodiment of the present invention, the image search system is adapted to perform a rough search based on a keyword, allow the user to select one or more query images from among results of the rough search and perform a re-search based on the selected query images.

In a further embodiment of the present invention, the image search system is adapted to perform a rough search based on a keyword, perform an intermediate search for results of the rough search on the basis of a query image created by the user, allow the user to select one or more query images from among results of the intermediate search and perform a re-search based on the selected query images.

In another embodiment of the present invention, the image search system is adapted to perform a rough search based on a query image created by the user, perform an intermediate search for results of the rough search on the basis of a keyword, allow the user to select one or more query images from among results of the intermediate search and perform a re-search based on the selected query images.

In yet another embodiment of the present invention, the image search system is adapted to perform a rough search based on a query image created by the user and text information (for example, a keyword) describing a desired image to be found, allow the user to select one or more query images from among results of the rough search and perform a re-search based on the selected query images.

## BRIEF DESCRIPTION OF THE DRAWINGS

The above and other objects, features and other advantages of the present invention will be more clearly understood from the following detailed description taken in conjunction with the accompanying drawings, in which:

Fig. 1 is a view illustrating an example of a query image creation tool which is applied to an image search system of the present invention;
Fig. 2 is a view illustrating another example of the query image creation tool which is applied to the image search system of the present invention;
Fig. 3 is a flow chart illustrating a first embodiment of an image search method in accordance with the present invention;
Fig. 4 is a flow chart illustrating a second embodiment of the image search method in accordance with the present invention;
Fig. 5 is a flow chart illustrating a third embodiment of the image search method in accordance with the present invention;
Fig. 6 is a flow chart illustrating a fourth embodiment of the image search method in accordance with the present invention;
Fig. 7 is a flow chart illustrating a fifth embodiment of the image search method in accordance with the present invention;
Fig. 8 is a flow chart illustrating a sixth embodiment of the image search method in accordance with the present invention;
Fig. 9 is a flow chart illustrating a seventh embodiment of the image search method in accordance with the present invention;
Fig. 10 is a flow chart illustrating an eighth embodiment of the image search method in accordance with the present invention;
Fig. 11 is a flow chart illustrating a ninth embodiment of the image search method in accordance with the present invention;
Fig. 12 is a block diagram showing a first embodiment of an image search apparatus in accordance with the present invention;
Fig. 13 is a block diagram showing a second embodiment of the image search apparatus in accordance with the present invention; and
Fig. 14 is a block diagram showing a third embodiment of the image search apparatus in accordance with the present invention.

## DESCRIPTION OF THE PREFERRED EMBODIMENTS

Now, preferred embodiments of an image search system in accordance with the present invention will be described in detail with reference to the accompanying drawings.

In a main feature of the present invention, a search result combination method and order are very important in order to combine different types of query and search methods employing different types of information. That is, an inefficient combination method may make it impossible to obtain desired performance.

An image search method proposed in the present invention is roughly classified into three types, based on a query order. The image search method of the first type is to first perform a search operation based on a query image created by a user using a sketch and then perform a search operation based on a general query image. The image search method of the second type is to first perform a search operation based on text information (for example, a keyword) and then perform a search operation based on the general query image. The image search method of the third type is to first perform a search operation based on the combination of a rough search using the query image created by the user and a rough search using the text information, such as the keyword, and then perform a search operation based on the general query image.

A more detailed description will hereinafter be given of the different types of image search methods according to the present invention.

## 1) SEARCH FIRST BASED ON QUERY USING SKETCH AND THEN BASED ON QUERY USING QUERY IMAGE

This image search method comprises the step of searching for a desired image to be found, on the basis of an image created by the user as a query image, the step of allowing the user to select one or more images similar to the desired image from among search results for the desired image, and the step of designating the selected similar images as query images and re-searching for the desired image on the basis of the designated query images. This image search method is adapted to perform the image search in the following manner.

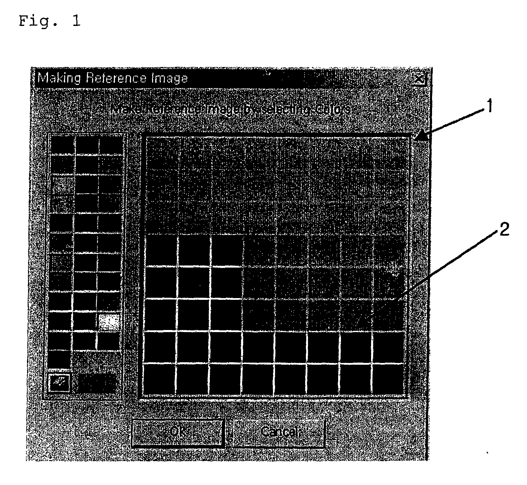

The user first creates an image and then performs a primary search (rough search) on the basis of the created image as a query image. Fig. 1 illustrates an example of a user interface through which the user can create the query image. As shown in this drawing, a query image having colors as feature information can be made by partitioning an image board 1 into N∗M blocks 2 and filling the partitioned blocks with selected colors.

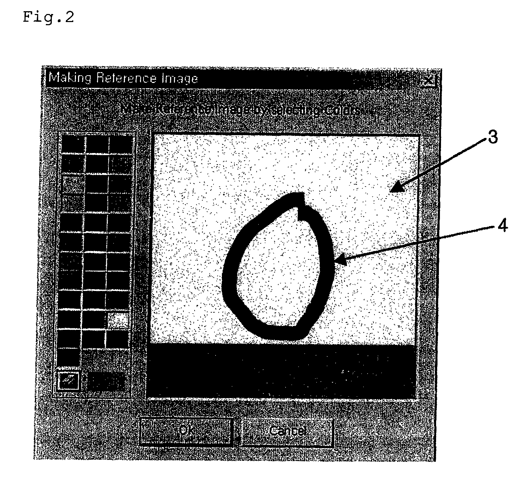

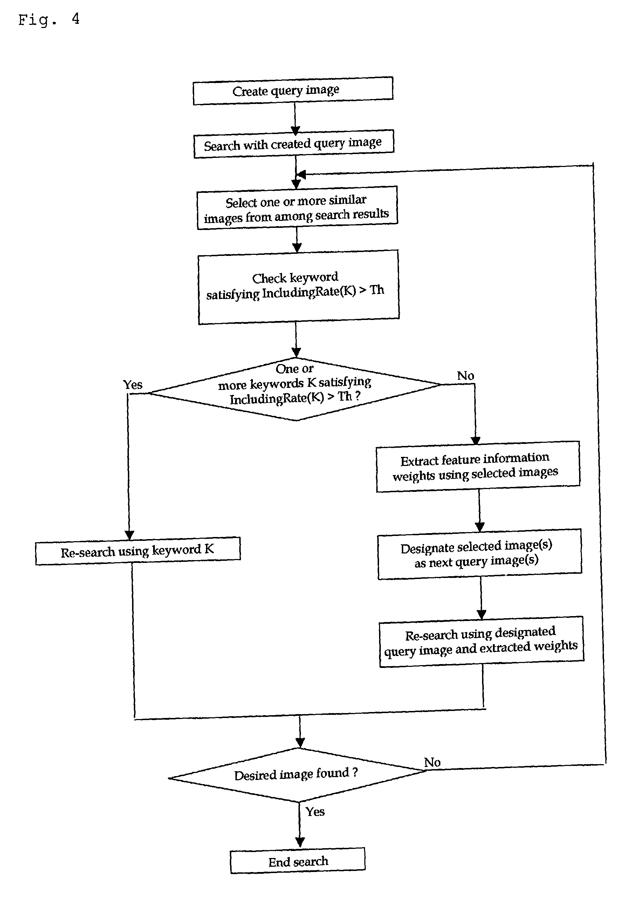

Fig. 2 illustrates another example of the query image creation. The user can make a sketch of an image, such as a figure 4, on an image board 3 through the use of a pen with a thickness and color selected by him/her. Alternatively, the user may more readily sketch an image by previously drawing a basic figure such as a circle or rectangle.

After performing the primary search (rough search) on the basis of the query image created using the image creation tool as stated above, the user selects an image considered to be similar to a desired image to be found, from among results of the primary search (these search results are images matching the desired image that the search system has found and displayed on an interface window by searching for the desired image on the basis of the query image created by the user), and feeds the selected image back to the search system. Then, the search system performs a secondary search on the basis of the fed back image as a query image. That is, from the secondary search, a query process is carried out on the basis of the query image fed back by the user. The user conducts the search through the query process based on the query image until the desired image is found. In some cases, the user may select a plurality of query images from among the rough search results. With the plurality of query images being selected, the image search can be performed in the following manner.

## 1.1) SEARCH USING FEATURE INFORMATION WEIGHTS AND ONE QUERY IMAGE

This image search method is to perform a research operation using any one of query images fed back by the user.

As stated previously, the user selects a plurality of images considered to be similar to a desired image to be found, from among rough search results based on a query image created by him/her. Using such information, the search system can automatically set weights to feature information to be used for the search. It is defined herein that the feature information signifies only low-level feature information, such as a color histogram, among information describing an image. In other words, high-level information, such as a keyword, does not belong to feature information referred to in the present invention, and will hereinafter be given a separate name, called "text information".

For example, assume that two feature information, or a color histogram and a texture histogram, are used. Similarities of the selected images are calculated on the basis of respective feature information of the selected images, and relatively high weights are applied to feature information resulting in higher values of the calculated similarities, among the respective feature information of the selected images. The application of a relatively high weight signifies that the entire similarity is calculated by applying that much weight to search results based on the corresponding feature information. Weights can be calculated as in the below equation 1:

[Equation 1]

$$Weight(k) = Cont(k)/Cont(All)$$

$$Cont(k) = \sum_{i=1}^{n-1} \sum_{j=i+1}^{n} Sim(i,j,k)$$

$$Cont(All) = \sum_{k=1}^{m} Cont(k)$$

(where, n is the number of reference objects, m is the number of feature elements used for similarity measurement, Weight(k) is a weight of a kth feature element, Sim (i,j,k) is a similarity between an ith reference object and a jth reference object, based on the kth feature element, and Cont(k) is a contribution of the kth feature element)

The similarity Sim(i,j,k) is calculated between two objects. For the image search, an image most similar to a query image can be found by sequentially selecting object images to be searched for and calculating a similarity between each of the selected object images and the query image. In this regard, the similarity between the ith reference object and the jth reference object signifies a similarity between two images i and j.

Generally, the similarity is calculated by comparing feature element values of two images to obtain a difference therebetween. One image may include a plurality of feature elements, which are information such as a color histogram. For example, one image may include a color histogram and a texture histogram together. In this case, similarities are calculated using the color histogram and texture histogram, respectively, and the entire similarity is then obtained by calculating the sum of the calculated similarities. In other words, in the case where one image includes N feature elements, similarities are sequentially calculated on the basis of only the respective feature elements and the final similarity is then calculated by summing up the calculated similarities. In this regard, the calculation of the similarity using the kth feature element signifies the calculation of a similarity between two images i and j using a kth one of the N feature elements.

The calculation of a similarity using one feature element may be performed in different manners according to the type of the feature element. However, in general terms, the similarity can be obtained as a value of (maximum distance - measured distance) and the measured distance can be obtained as the sum of differences between respective absolute values of numerical values of two feature elements. For example, a color histogram may be a color distribution of pixels existing in an image, which distribution can be expressed by a certain number of numerical values. The distance between two histograms can be obtained by taking absolute values of respective differences between numerical values at the same positions and summing up the taken absolute values. The maximum distance signifies a possible longest distance of a given feature element in terms of its characteristics. It is common practice that the maximum distance of the histogram is '1'.

If weights are calculated as in the above equation 1, then the actual search is conducted on the basis of the calculated weights. Any one of a plurality of selected images is designated as a query image for the search. The selection of one query image from among a plurality of selected images is carried out by designating the earliest selected one of the selected images as the query image, or calculating a similarity between each of the selected images and an initial query image created by the user and designating an image with the highest similarity among the selected images as the query image. A similarity between two images reflecting weights can be calculated as in the below equation 2:

**[Equation 2]**

$$Similarity = \sum_{i=1}^{n} w_i Sim_i$$

(where, n is the number of feature information, wi is a weight of feature information i, and Simi is a similarity based on the feature information i)

1.2) SEARCH USING FEATURE INFORMATION WEIGHTS AND MULTIPLE QUERY IMAGES

This image search method is to perform a re-search operation using a plurality of query images fed back by the user.

If a plurality of images are selected by the user as stated previously, then weights to feature information of the selected images are set in the same manner as the above-described weight setting method. At this time, all the plurality of selected images are used as query images for the image search based on the set weights. In the search using one query image, as described above, a similarity between each object image and the query image is calculated. Alternatively, in this search using all a plurality of selected images as query images, similarities are calculated by comparing each object image with the plurality of selected images one by one in order, and the final similarity is then obtained by summing up the calculated similarities. In this case, the similarity calculation can be made as in the following equation 3:

**[Equation 3]**

$$Similarity = \sum_{j=l}^{n-1} \sum_{k=1}^{m} (j,k)$$

(where, n is the number of query images, m is the number of feature elements used for similarity measurement, and Sim(j,k) is a similarity between a reference object and a jth query image using a kth feature element)

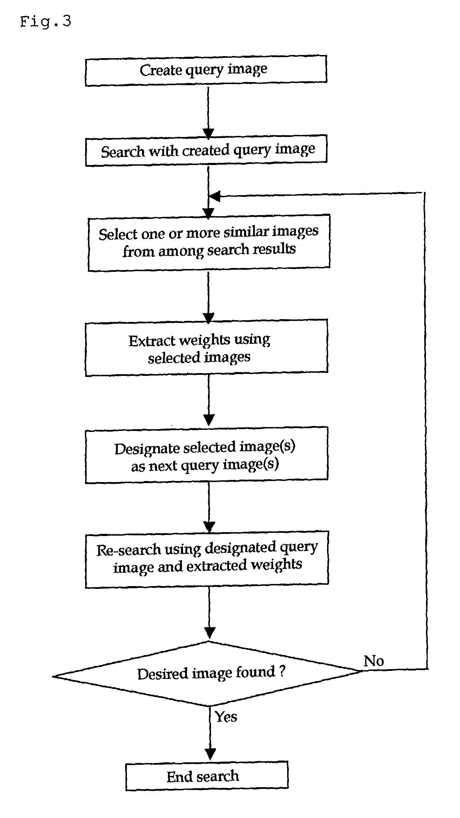

Fig. 3 is a flow chart illustrating a method (1.1 or 1.2) for selecting one or more query images from among rough search results based on a query image created by the user and performing a re-search operation using the selected query images and feature information weights.

With reference to Fig. 3, the user creates a query image through the use of the image creation tool as shown in Fig. 1 or 2 and searches for a desired image to be found, on the basis of the created query image. Then, the user selects one or more images considered to be similar to the desired image, from among search results, and feeds the selected images back to the search system. Feature information weights are extracted on the basis of the selected image(s), and any one (s) of the selected images is designated as an image(s) to be used for the next query. Thereafter, a re-search operation is performed on the basis of the designated query image and the extracted feature information weights to find the desired image.

## 1.3) SEARCH SELECTIVELY USING TEXT INFORMATION AND FEATURE INFORMATION

The above-described two methods (1.1 and 1.2) are exemplary methods for performing a re-search operation using only feature information such as a color histogram. But, image description information generally contains text information, such as a keyword, and feature information, such as a color histogram, together. In this case, rather than using only the feature information, it would be more efficient to determine which one of the text information and feature information is more appropriate to a re-search operation for each query and perform the re-search operation in accordance with the determined result. A keyword including condition IncludingRate may be used for such a determination in a current query.

Fig. 4 illustrates an example of a search selectively using text information and feature information.

First, the user creates a query image, performs a rough search using the created query image and then selects one or more images similar to a desired image to be found, from among results of the rough search. Thereafter, the user selects any one of a keyword-based research and a feature information-based research. That is, in the case where there is text information, or a keyword, commonly described in the selected similar images, a search for a current query is carried out on the basis of the commonly described keyword. This case signifies that the user desires to carry out the search from a keyword point of view. For example, in the case where more than a predetermined threshold value Th, 70%, of the selected images include a specific keyword in common, a re-search operation may be predefined to be performed on the basis of the specific keyword.

Here, the threshold value of 70% represents a commonly included occurrence of a specific keyword, and was calculated by a commonly included occurrence of a keyword K, IncludingRate(K) = n/m ∗ 100(%), where n is the number of images including the keyword K, among images selected by the user, and m is the number of the images selected by the user.

Accordingly, provided that a plurality of keywords are included in common, a search operation will be able to be performed on the basis of the plurality of keywords. If there is no keyword commonly included in more than 70% of the selected images, a re-search operation is performed on the basis of only feature information. In this case, the above-stated method (see the equation 1 and equation 2) is employed to calculate weights, designate any one or all of the selected images as query images and carry out a search using the designated query images. That is, in the case where there are not present one or more keywords K satisfying the condition of IncludingRate(K) > Th, feature information weights are extracted on the basis of the selected images, and any one(s) of the selected images is designated as an image(s) to be used for the next query. Thereafter, a re-search operation is performed on the basis of the designated query image and the extracted feature information weights to find a desired image.

The above description has been given of an example of a method for performing a re-search operation by selectively using any one of a keyword and feature information as a result of the analysis of similar images selected by the user. Extending this concept, a re-search operation may be carried out on the basis of the combination of a keyword and feature information. Such a re-search operation based on the combination of a keyword and feature information can be performed in consideration of the following three cases.

## 1.3.1) KEYWORD-FEATURE INFORMATION SEARCH

In the case where there is a keyword having a commonly included occurrence IncludingRate greater than a predetermined threshold value Th1, a search based on the combination of the keyword and feature information is carried out in the following manner.

Namely, a search operation is performed on the basis of only the keyword, and only images having matching points greater than a predetermined threshold value T1 among search results are designated as result candidates. Then, a similarity between each of the designated result candidates and a query image created by the user is calculated on the basis of feature information, and search results are extracted in the order of descending values of the calculated similarities.

## 1.3.2) FEATURE INFORMATION-KEYWORD SEARCH

In the case where there is no keyword having a commonly included occurrence IncludingRate greater than the predetermined threshold value Th1, a search based on the combination of a keyword and feature information is carried out in the following manner.

Namely, a similarity between each object image and a designated query image is calculated on the basis of feature information, and only images whose similarities are greater than a predetermined threshold value among the object images are then designated as result candidates. In the case where a keyword having a commonly included occurrence IncludingRate lower than the predetermined threshold value Th1 and higher than a lower threshold value Th2 (Th2 < Th1) is present in the designated result candidates, a search operation is performed on the basis of the keyword, and search results are extracted in the order of descending matching points.

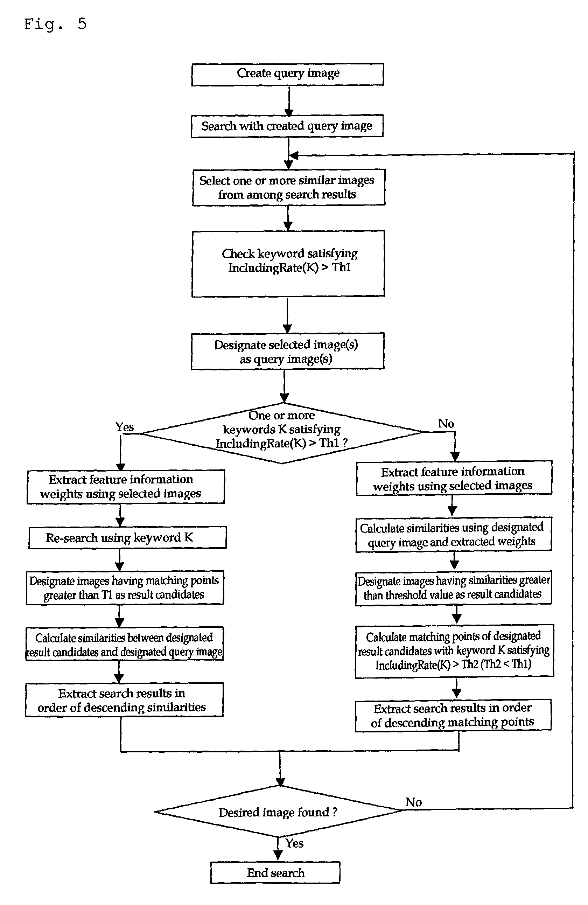

Fig. 5 illustrates a method for performing a re-search operation in the order of keyword-feature information search or feature information-keyword search according to a commonly included occurrence IncludingRate in the above manner.

The above-stated search methods (1.3.1 and 1.3.2) will hereinafter be described in more detail with reference to Fig. 5.

First, the user creates a query image, conducts a search based on the created query image and selects one or more images considered to be similar to a desired image to be found, from among search results. It is checked whether a keyword satisfying the condition of IncludingRate(K) > Th1 is present among keywords included in the images selected by the user, and any one (s) of the selected images is designated as a query image(s). Thereafter, a determination is made as to whether there are one or more keywords K satisfying the condition of IncludingRate(K) > Th1.

In the case where it is determined that there are one or more keywords K satisfying the above condition, feature information weights are extracted on the basis of the selected images, a re-search operation is performed on the basis of the keywords K, and only images having matching points greater than the predetermined threshold value T1 among search results are designated as result candidates. Then, a desired image to be found is obtained by calculating a similarity between each of the designated result candidates and the designated query image and extracting search results in the order of descending values of the calculated similarities. However, in the case where it is determined that there is no keyword K satisfying the above condition, feature information weights are extracted on the basis of the selected images, a similarity between each object image and the designated query image is calculated on the basis of the extracted feature information weights, and only images whose similarities are greater than a predetermined threshold value among the object images are then designated as result candidates. Thereafter, a desired image to be found is obtained by calculating matching points of the designated result candidates with a keyword K satisfying the condition of IncludingRate(K) > Th2 (Th2 < Th1), and extracting search results in the order of descending values of the calculated matching points.

## 1.3.3) FEATURE INFORMATION/KEYWORD COMBINATION-BASED SEARCH

This search method is to perform a search operation based on the combination of feature information and a keyword. In this search method, feature information weights are extracted on the basis of a plurality of selected similar images, and a keyword weight is defined to be a value of $IncludingRate * \alpha$. The entire similarity of each object image is calculated by similarity based on feature information reflecting weights + keyword weight $*$ keyword matching point, and search results are then extracted on the basis of the calculated entire similarities.

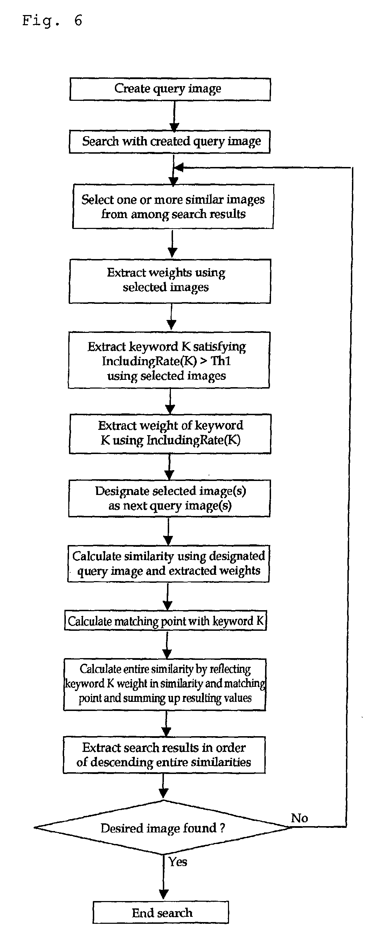

Fig. 6 illustrates a method for combining feature information and a keyword using their weights and performing a re-search operation on the basis of the resulting combination.

The above-stated search method (1.3.3) will hereinafter be described in more detail with reference to Fig. 6.

First, the user conducts a search based on a query image created by him/her and selects one or more similar images from among search results. Then, feature information weights are extracted on the basis of the selected images, and a keyword K satisfying the condition of IncludingRate(K) > Th1 is in turn extracted on the basis of the selected images. Also, a weight of the keyword K is extracted on the basis of IncludingRate (K). Subsequently, any one(s) of the selected images is designated as a next query image(s), a similarity between each object image and the designated query image is calculated on the basis of the extracted weights, and a matching point of each object image with the keyword K is calculated. Thereafter, the entire similarity of each object image is obtained by reflecting the keyword K weight in the calculated similarity and matching point and summing up the resulting values.

Namely, entire similarity = similarity based on feature information reflecting weights + keyword weight $*$ keyword matching point. A desired image to be found is obtained by performing a search based on the entire similarities calculated in the above manner and extracting search results in the order of descending values of the calculated entire similarities.

The above-described method (1.3, 1.3.1, 1.3.2 or 1.3.3) for automatically selecting or combining text information and low-level feature information using similar images selected by the user and performing a search operation based on the selected or combined result may be extensibly applied to existing image searches other than the sketch-based image search.

For example, the above-described search method may be applied to an existing method for selecting a feature image as a query image and searching for similar images using the selected query image.

In the case where the above-described search method is applied to such an existing method, until the user finds a desired image, the user can select similar images from among intermediate search results and the search system can determine which one of the low-level feature information and text information will be used for the next search, in the same manner as the above-described search method (search order and query element selections based on the IncludingRate(K) condition, etc.).

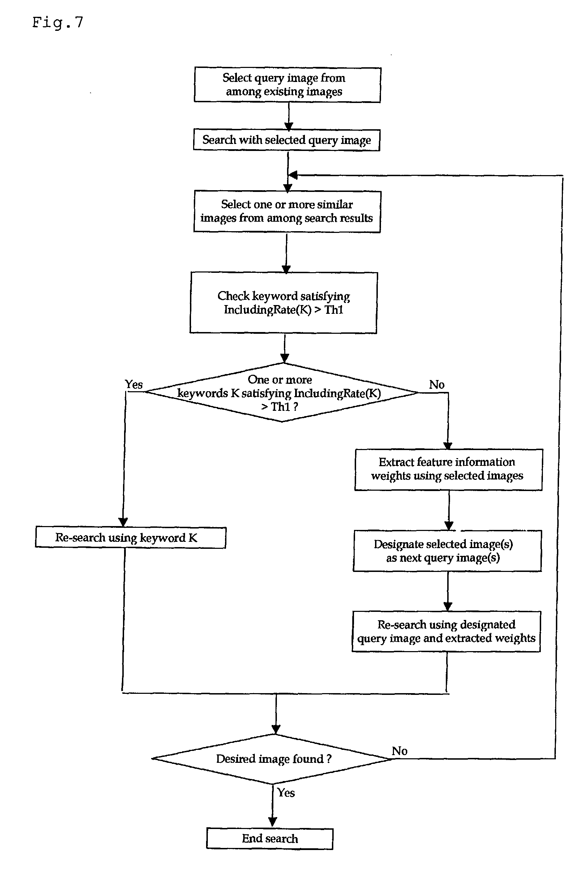

An example of such an extended application is illustrated in a flow chart of Fig. 7. That is, Fig. 7 illustrates an extended version of the concept (1.3) of Fig. 4.

In other words, the user selects a query image (not created) from among existing images, conducts a search based on the selected query image, selects one or more similar images from among search results and feeds the selected similar images back to the search system. Then, the search system determines whether one or more keywords K satisfying the condition of IncludingRate(K) > Th1 are present among keywords included in the similar images selected by the user. If there are one or more keywords K satisfying the above condition, the search system obtains a desired image to be found, by carrying out a re-search operation based on the keywords K. Otherwise, the search system obtains the desired image by sequentially performing the following steps: extracting feature information weights on the basis of the similar images selected by the user; designating any one(s) of the selected images (for example, the earliest selected one of the selected images) as a next query image(s); and performing a re-search operation based on the designated query image and the extracted feature information weights.

On the other hand, the re-search method based not on the selection of any one of text information and feature information, but on the combination of them (1.3.1, 1.3.2 or 1.3.3) may similarly be extensibly applied to existing image searches.

## 2) SEARCH FIRST BASED ON QUERY USING TEXT INFORMATION AND THEN BASED ON QUERY USING QUERY IMAGE

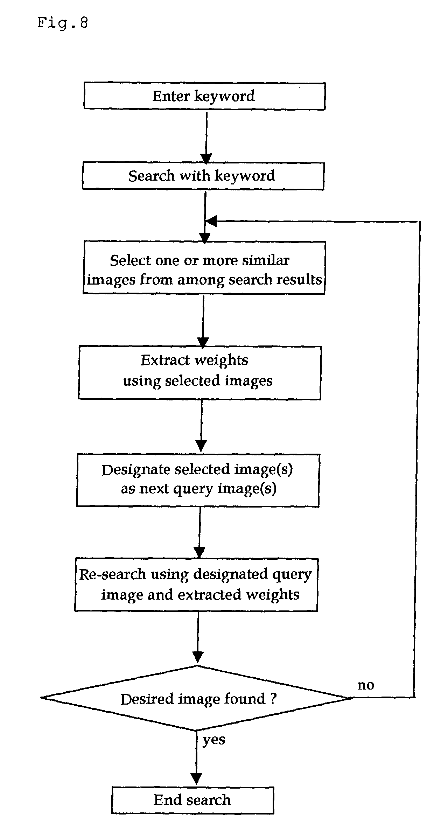

In the section 1), the user first used a query image created by him/her, to find an appropriate query image, and a re-search operation was then performed on the basis of the found query image. In the present section, a description will be given of a method using text information, such as a keyword, instead of a query image created by the user. Fig. 8 illustrates a method for selecting a query image from among rough search results based on a query using text information (for example, a keyword) and performing a research operation based on the selected query image.

First, the user obtains rough search results using a keyword. That is, the user obtains search results by entering a keyword and conducting an image search based on the entered keyword. Then, the user selects one or more similar images from among the rough search results. After the plurality of similar images are selected in this manner, the search system can perform a re-search operation using the above-stated 'search method using feature information weights and one query image' or 'search method using feature information weights and multiple query images'. Namely, the search system obtains a desired image to be found, by extracting weights of the plurality of similar images selected by the user, designating any one(s) of the selected images as a next query image(s) and performing a re-search operation on the basis of the designated query image and feature information reflecting the extracted weights.

## 3) SEARCH FIRST BASED ON QUERY USING SKETCH/TEXT INFORMATION AND THEN BASED ON QUERY USING QUERY IMAGE

In this section, a description will be given of a method for performing a rough search operation based on the combination of a rough search using a query image created by the user and a rough search using text information such as a keyword.

In this method, a keyword is used as an example of text information. First, the user creates a query image, enters an appropriate keyword and conducts a rough search using the created query image and the entered keyword. Such a search operation based on the combination of two different query elements (a created query image and a keyword in the present embodiment) can be performed in consideration of the following three cases.

## 3.1) KEYWORD-SKETCH SEARCH

This keyword-sketch search method is to perform a search operation on the basis of only a keyword, designate only images having matching points greater than a predetermined threshold value among search results as result candidates, calculate a similarity between each of the designated result candidates and a created query image on the basis of feature information and then extract search results in the order of descending values of the calculated similarities.

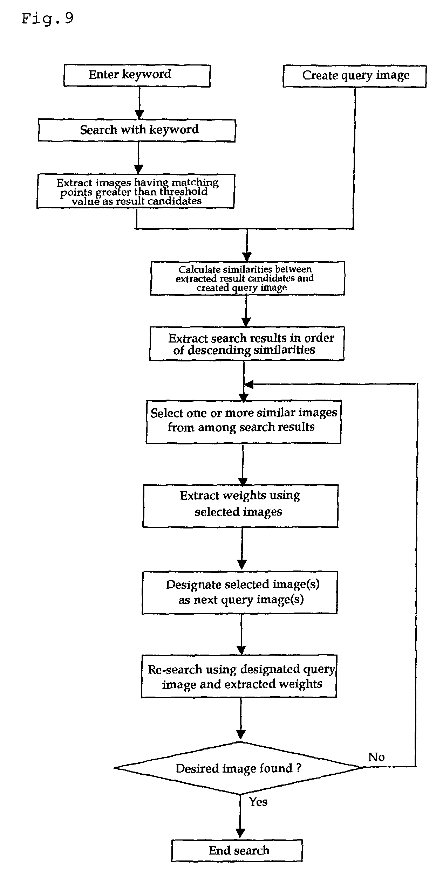

This keyword-sketch search method is shown in Fig. 9.

First, a query image is created. Then, an image search operation is carried out on the basis of a keyword entered by the user. Images whose matching points are greater than a predetermined threshold value are extracted as result candidates from among search results, and a similarity between each of the extracted result candidates and the query image created by the user is calculated. Then, search results are extracted in the order of descending values of the calculated similarities. The user selects one or more images considered to be similar to a desired image to be found, from among the search result images. Weights are extracted on the basis of the selected images and any one(s) of the selected images is designated as a query image(s).

A re-search operation is performed on the basis of the designated query image and the extracted weights to obtain the desired image to be found.

## 3.2) SKETCH-KEYWORD SEARCH

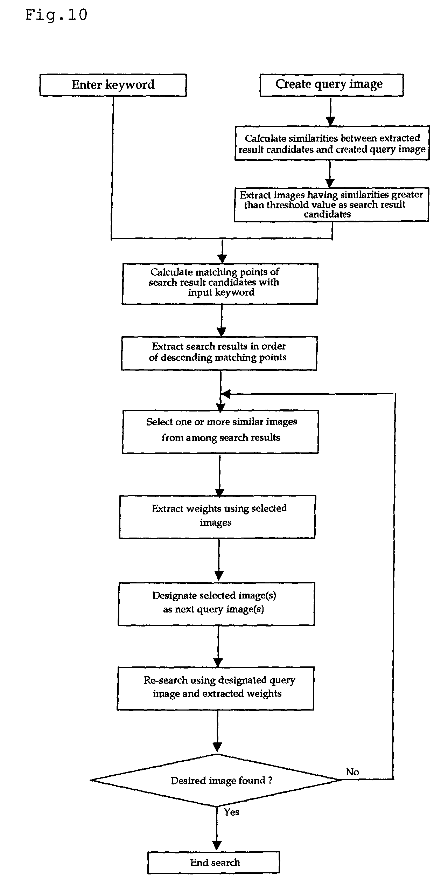

This sketch-keyword search method is to calculate a similarity between each object image and a created query image on the basis of feature information, designate only images whose similarities are greater than a predetermined threshold value among the object images as result candidates, perform a search operation for the designated result candidates on the basis of a query keyword and then extract search results in the order of descending matching points. This sketch-keyword search method is shown in Fig. 10.

First, a query image is created. Then, an image search operation is carried out on the basis of a query image created by the user to extract result candidates. A similarity between each of the extracted result candidates and the query image created by the user is calculated and search result candidates are then extracted in the order of descending values of the calculated similarities. Thereafter, matching points of the search result candidates based on the similarities with an input keyword are calculated and search results are extracted in the order of descending values of the calculated matching points. The user selects one or more images considered to be similar to a desired image to be found, from among the search result images based on the keyword matching points. Weights are extracted on the basis of the selected images and any one(s) of the selected images is designated as a query image(s).

A re-search operation is performed on the basis of the designated query image and the extracted weights to obtain the desired image to be found.

## 3.3) SKETCH/KEYWORD COMBINATION SEARCH

This sketch/keyword combination search method is to calculate a similarity between each object image and a created query image on the basis of feature information, and a matching point of each object image with a query keyword, respectively, obtain the entire similarity of each object image by combining the calculated similarity and keyword matching point, and then extract search results on the basis of the obtained entire similarities. An experimentally obtained certain weight may be applied to the sum of each similarity and each keyword matching point.

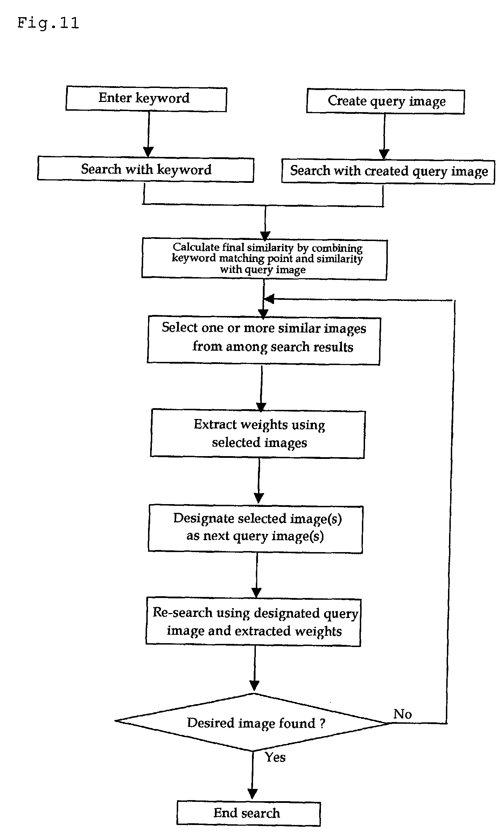

Fig. 11 illustrates the sketch/keyword combination search method.

Consideration is given to both image search results based on an input keyword and search results based on a query image created by the user. That is, the final similarity of each object image is obtained by combining a matching point of each object image with the input keyword and a similarity between each object image and the query image, and search results are then extracted on the basis of the obtained final similarities. The user selects one or more images considered to be similar to a desired image to be found, from among the search result images based on the final similarities. Weights are extracted on the basis of the selected images and any one(s) of the selected images is designated as a query image(s).

A re-search operation is performed on the basis of the designated query image and the extracted weights to obtain the desired image to be found.

The three types of query-search methods have been described.

Next, a description will be given of an image search apparatus based on the image search method of the present invention previously described with reference to Figs. 3 to 11.

## 4. EMBODIMENT 1 OF IMAGE SEARCH APPARATUS

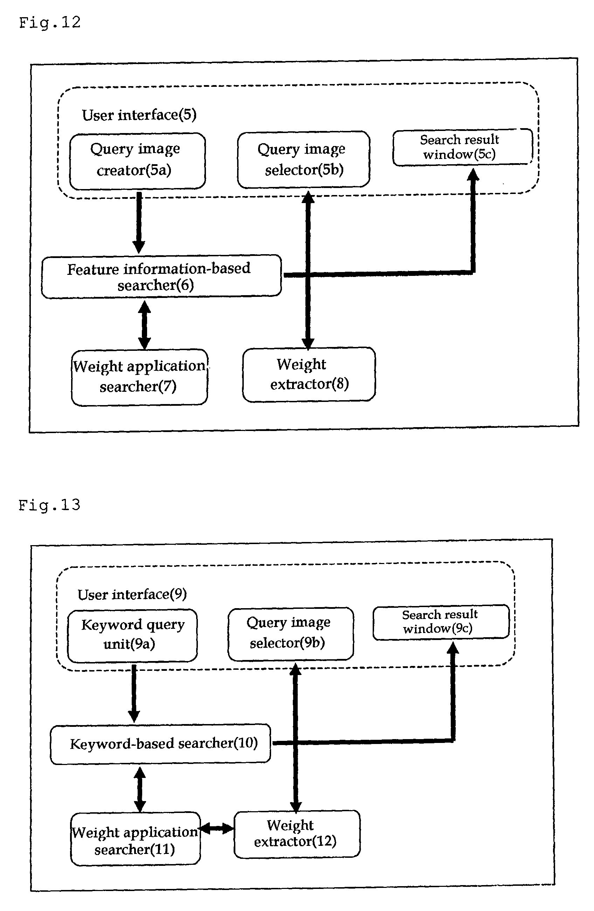

Fig. 12 is a block diagram showing a first embodiment of an image search apparatus in accordance with the present invention.

For application of an image search method using query images (a query image created by the user and a query image selected by the user) and feature information/weights as described previously, the image search apparatus of the present invention comprises a user interface 5, a feature information-based searcher 6, a weight application searcher 7 for performing a search operation based on weight application, and a weight extractor 8 for calculating weights on the basis of similar images selected by the user to learn and apply the weights. The user interface 5 includes a query image creator 5a for allowing the user to create a query image, a query image selector 5b for allowing the user to select an image considered to be similar to a desired image to be found, as a query image, and a search result window 5c for showing search results.

The image search apparatus of Fig. 12 is adapted to execute an image search method based on a query image created by the user, a query image selected by the user, feature information and weights as described previously.

That is, the query image creator 5a functions to allow the user to create a query image and use the created query image as a rough search query element. The query image selector 5b functions to allow the user to select and use one or more query images as rough search or re-search query elements. The search result window 5c acts to show search results. The feature information-based searcher 6 is adapted to perform an image search operation in consideration of feature information. The weight application searcher 7 is adapted to perform a search operation based on application of weights calculated by the weight extractor 8. The weight extractor 8 is adapted to calculate weights on the basis of similar images selected by the user to learn and apply the weights.

### 5. EMBODIMENT 2 OF IMAGE SEARCH APPARATUS

Fig. 13 is a block diagram showing a second embodiment of the image search apparatus in accordance with the present invention.

The second embodiment of Fig. 13 is substantially the same in construction as the first embodiment of Fig. 12, with the exception that a user interface 9 including a keyword query unit 9a, and a keyword-based searcher 10 replace the user interface 5 including the query image creator 5a, and the feature information-based searcher 6, respectively, for execution of an image search method using a keyword instead of a created query image.

A query image selector 9b, search result window 9c, weight application searcher 11 and weight extractor 12 are the same as those in Fig. 12.

Therefore, the image search apparatus of Fig. 13 can execute the image search method of the present invention which uses a keyword as a query element.

### 6. EMBODIMENT 3 OF IMAGE SEARCH APPARATUS

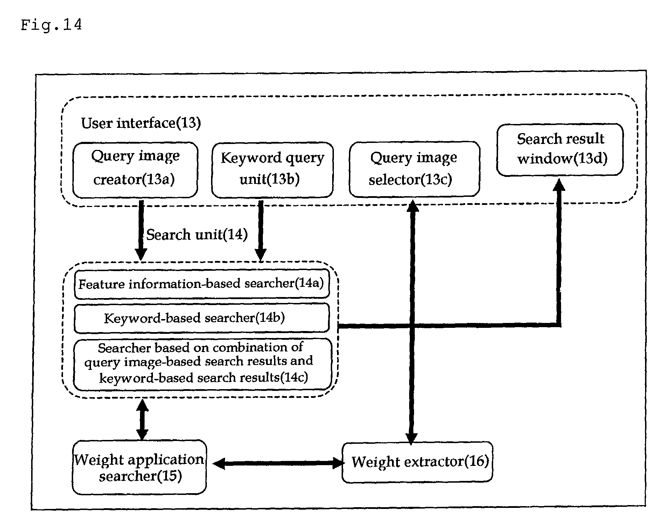

Fig. 14 is a block diagram showing a third embodiment of the image search apparatus in accordance with the present invention.

This image search apparatus is adapted to execute the above-described third image search method (3, 3.1, 3.2 or 3.3) for performing a rough search operation based on the combination of a rough search using a query image created by the user and a rough search using a keyword entered by the user.

In the image search apparatus of Fig. 14, a user interface 13 includes a query image creator 13a, keyword query unit 13b, query image selector 13c and search result window 13d. In this case, a search unit 14 includes a feature information-based searcher 14a for calculating similarities between object images and a query image and performing a search operation based on the calculated similarities, a keyword-based searcher 14b for performing a search operation based on an input keyword, and a searcher 14c for calculating the final similarities on the basis of the combination of query image-based search results and keyword-based search results and extracting search results on the basis of the calculated final similarities. Therefore, the image search apparatus of Fig. 14 can perform an image search operation by using both the search based on a query image created by the user and the search based on an input keyword.

Here, a weight application searcher 15 and weight extractor 16 are the same as those stated previously.

As apparent from the above description, the present invention provides an image search method for performing a primary search based on a query image created by a user or a keyword to allow the user to readily find a plurality of query images, and then performing a secondary search based on the plurality of query images found by the user. Therefore, the present image search method is more practically useful as compared with conventional image search methods in terms of actual image search application.

Namely, in conventional image search methods, a query image-based search operation was carried out for provision of high performance, resulting in difficulties in finding an appropriate initial query image. Also, it was hard to find a desired image in using a keyword or a created query image to facilitate a primary search. However, the present invention has solved such problems.

The present invention sequentially combines and effectively uses query methods. To this end, a primary search is conducted on the basis of a created image or a keyword and a re-search is then conducted on the basis of query images selected from among search results. For the optimum re-search, a plurality of query images are selected and weights appropriate to a current query are automatically calculated on the basis of the selected query images. As a result, the present invention provides convenience to the user and high search performance.

In particular, this invention can be put to practical use for Web page searches over the Internet and very effectively used for image searches for a multidatabase, or a plurality of servers, having recently been widely studied.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

**Claims**

1. An image search method comprising the steps of:

   a) searching for a desired image to be found, on the basis of an image created by a user as a query image;
   b) allowing the user to select one or more images similar to said desired image from among search results for said desired image; and
   c) designating the selected similar images as query images and re-searching for said desired image on the basis of the designated query images.

2. The image search method as set forth in claim 1, wherein said step c) includes the step of calculating feature information weights on the basis of said similar images selected by the user and performing the re-search on the basis of the calculated feature information weights.

3. The image search method as set forth in claim 1 or 2, wherein said step c) includes the step d) of performing the re-search on the basis of selection of any one or combination of text information commonly included in said similar images selected by the user and low-level feature information, a sequential combination of said text information and low-level feature information, and an availability of said text information.

4. The image search method as set forth in claim 3, wherein said step d) includes the step of obtaining said text information availability by calculating an occurrence rate of a commonly included specific keyword in said similar images selected by the user.

5. The image search method as set forth in claim 3 or 4, wherein said step d) includes the step of performing the re-search on the basis of said text information commonly included in said similar images selected by the user if said text information availability is greater than a predetermined threshold value, and on the basis of said low-level feature information if said text information availability is not greater than said predetermined threshold value.

6. The image search method as set forth in at least one of claims 3 to 5, wherein said step d) includes, in order to perform the research on the basis of the sequential combination of said text information and low-level feature information, the steps of:

   calculating said text information availability;
   calculating weights of said feature information;
   calculating a weight of said text information in proportion to said text information availability;

   obtaining a final similarity of each object image by summing up a similarity of each object image based on said feature information reflecting the calculated feature information weights and text information weight, and a text matching point of each object image; and
   outputting search results in the order of descending values of the calculated final similarities.

7. An image search method comprising the steps of:

   a) outputting similar image candidates in response to a user's query;
   b) allowing the user to select images considered to be similar to a desired image to be found, from among said similar image candidates; and
   c) calculating an availability of text information included in the selected similar images, determining a next query element as a result of the calculation and performing a re-search operation on the basis of the determined query element.

8. The image search method as set forth in claim 7, wherein said next query element determined according to said text information availability is any one or combination of said text information and low-level feature information, or a sequential combination of said text information and low-level feature information.

9. An image search method comprising the steps of:

   a) searching for a desired image to be found, on the basis of a keyword;
   b) selecting images similar to said desired image from among search results for said desired image; and
   c) designating the selected similar images as query images and re-searching for said desired image on the basis of the designated query images.

10. The image search method as set forth in claim 9, wherein said step c) includes the step of calculating feature information weights on the basis of said similar images selected by the user and performing the re-search on the basis of the calculated feature information weights.

11. An image search method comprising the steps of:

   a) allowing a user to create a query image and enter a keyword;
   b) performing a rough search on the basis of the created query image and the entered keyword;

c) selecting images similar to a desired image to be found, from among results of the rough search; and

d) designating one or more of the selected similar images as query images and performing a re-search on the basis of the designated query images.

**12.** The image search method as set forth in claim 11, wherein said step b) includes the steps of:

performing a search operation based on said keyword entered by the user; and

performing a search operation for search results based on said keyword entered by the user on the basis of said query image created by the user to output the rough search results.

**13.** The image search method as set forth in claim 11 or 12, wherein said step b) includes the steps of:

performing a search operation based on said query image created by the user; and

performing a search operation for search results based on said query image created by the user on the basis of said keyword entered by the user to output the rough search results.

**14.** The image search method as set forth in at least one of claims 11 to 13, wherein said step b) includes the steps of:

performing a search operation based on said query image created by the user and a search operation based on said keyword entered by the user together; and

combining similarities based on said created query image and keyword information matching points to output the rough search results.

**15.** The image search method as set forth in at least one of claims 11 to 14, wherein said step c) includes the step of calculating feature information weights on the basis of said similar images selected by the user and performing the re-search on the basis of the calculated feature information weights.

**16.** An image search apparatus comprising:

user interface means for sequentially and hierarchically combining and inputting different types of query elements for an image search based on said query elements; and

search means for performing the image search based on said query elements inputted by said user interface means to output search results corresponding to the sequential and hierarchical combination of said query elements.

**17.** The image search apparatus as set forth in claim 16, wherein said query elements are two of a query image created by a user, a query image from the user and an image description text.

**18.** The image search apparatus as set forth in claim 16 or 17, wherein said user interface means selectively includes a query image creator, a query image selector and a keyword query unit according to said query elements.

**19.** The image search apparatus as set forth in at least one of claims 16 to 18 17, further comprising:

weight extraction means for calculating feature information weights on the basis of a plurality of similar images selected by said user interface means; and

weight application search means for performing a search operation based on application of said feature information weights calculated by said weight extraction means.

**20.** The image search apparatus as set forth in at least one of claims 16 to 19 17, further comprising search information determination means for determining on the basis of a plurality of similar images selected by said user interface means which one of text information and low-level feature information will be used as a query element for a next search.

**21.** An image search method comprising the steps of:

a) inputting a query for a rough search;

b) performing the rough search on the basis of the inputted query; and

c) selecting images similar to a desired image to be found, from among results of said rough search; and

d) designating one or more of the selected similar images as query images and performing a re-search on the basis of the designated query images.

**22.** The image search method as set forth in claim 21, wherein said query for said rough search is based on a keyword entered by a user or a query image created by the user.

**23.** The image search method as set forth in claim 21 or 22, wherein said step d) includes the step of performing the re-search on the basis of feature information weights extracted from similar images selected by a user, or an availability of text information commonly included in the similar images selected by the user.

Fig. 1

Fig.2

Fig.3

```
┌─────────────────────────────┐
│      Create query image     │
└─────────────────────────────┘
               │
               ▼
┌─────────────────────────────┐
│  Search with created query image  │
└─────────────────────────────┘
               │
               ▼
┌─────────────────────────────┐
│  Select one or more similar images │
│     from among search results     │
└─────────────────────────────┘
               │
               ▼
┌─────────────────────────────┐
│      Extract weights using      │
│        selected images          │
└─────────────────────────────┘
               │
               ▼
┌─────────────────────────────┐
│    Designate selected image(s)   │
│      as next query image(s)      │
└─────────────────────────────┘
               │
               ▼
┌─────────────────────────────┐
│  Re-search using designated query │
│    image and extracted weights    │
└─────────────────────────────┘
               │
               ▼
          ◇ Desired image found ? ◇ ──── No
               │                         │
              Yes                        │
               ▼
┌─────────────────────────────┐
│          End search         │
└─────────────────────────────┘
```

Fig. 4

```
                    ┌─────────────────────────┐
                    │    Create query image   │
                    └────────────┬────────────┘
                                 ▼
                    ┌─────────────────────────┐
                    │ Search with created query image │
                    └────────────┬────────────┘
                                 ▼
                    ┌─────────────────────────┐
                    │ Select one or more similar │
                    │ images from among search results │
                    └────────────┬────────────┘
                                 ▼
                    ┌─────────────────────────┐
                    │     Check keyword       │
                    │ satisfying IncludingRate(K) > Th │
                    └────────────┬────────────┘
                                 ▼
                           ◇ One or
                    more keywords K satisfying
                      IncludingRate(K) > Th ?
         Yes ◄──────────────────────────────────► No
                                                    ▼
                                        ┌─────────────────────────┐
                                        │ Extract feature information │
                                        │ weights using selected images │
                                        └────────────┬────────────┘
                                                     ▼
  ┌─────────────────────────┐          ┌─────────────────────────┐
  │ Re-search using keyword K │          │ Designate selected image(s) │
  └─────────────┬───────────┘          │ as next query image(s)    │
                                        └────────────┬────────────┘
                                                     ▼
                                        ┌─────────────────────────┐
                                        │ Re-search using designated │
                                        │ query image and extracted weights │
                                        └────────────┬────────────┘
                                 ▼
                           ◇ Desired image found ?  ───► No
                                 │ Yes
                                 ▼
                    ┌─────────────────────────┐
                    │       End search        │
                    └─────────────────────────┘
```

Fig. 5

Create query image

Search with created query image

Select one or more similar images
from among search results

Check keyword satisfying
IncludingRate(K) > Th1

Designate selected image(s)
as query image(s)

One or more
keywords K satisfying
IncludingRate(K) > Th1 ?

**Yes**

Extract feature information
weights using selected images

Re-search using keyword K

Designate images having matching points
greater than T1 as result candidates

Calculate similarities between designated
result candidates and designated query image

Extract search results in
order of descending similarities

**No**

Extract feature information
weights using selected images

Calculate similarities using designated
query image and extracted weights

Designate images having similarities greater
than threshold value as result candidates

Calculate matching points of designated
result candidates with keyword K satisfying
IncludingRate(K) > Th2 (Th2 < Th1)

Extract search results in order
of descending matching points

Desired image found ?  **No**

**Yes**

End search

Fig. 6

```
┌─────────────────────────────┐
│     Create query image      │
└─────────────────────────────┘
              │
              ▼
┌─────────────────────────────┐
│ Search with created query image │
└─────────────────────────────┘
              │
              ▼ ◄──────────────────────┐
┌─────────────────────────────┐         │
│ Select one or more similar images │    │
│   from among search results  │        │
└─────────────────────────────┘         │
              │                         │
              ▼                         │
┌─────────────────────────────┐         │
│    Extract weights using     │        │
│      selected images         │        │
└─────────────────────────────┘         │
              │                         │
              ▼                         │
┌─────────────────────────────┐         │
│  Extract keyword K satisfying │        │
│   IncludingRate(K) > Th1     │        │
│     using selected images    │        │
└─────────────────────────────┘         │
              │                         │
              ▼                         │
┌─────────────────────────────┐         │
│   Extract weight of keyword  │        │
│   K using IncludingRate(K)   │        │
└─────────────────────────────┘         │
              │                         │
              ▼                         │
┌─────────────────────────────┐         │
│  Designate selected image(s) │        │
│    as next query image(s)    │        │
└─────────────────────────────┘         │
              │                         │
              ▼                         │
┌─────────────────────────────┐         │
│ Calculate similarity using designated │ │
│  query image and extracted weights │   │
└─────────────────────────────┘         │
              │                         │
              ▼                         │
┌─────────────────────────────┐         │
│ Calculate matching point with keyword K │
└─────────────────────────────┘         │
              │                         │
              ▼                         │
┌─────────────────────────────┐         │
│ Calculate entire similarity by reflecting │
│ keyword K weight in similarity and matching │
│ point and summing up resulting values │ │
└─────────────────────────────┘         │
              │                         │
              ▼                         │
┌─────────────────────────────┐         │
│  Extract search results in order │     │
│ of descending entire similarities │    │
└─────────────────────────────┘         │
              │                         │
              ▼                    No    │
        ◇─────────────────◇ ─────────────┘
        │ Desired image found ? │
        ◇─────────────────◇
              │
              │ Yes
              ▼
┌─────────────────────────────┐
│        End search           │
└─────────────────────────────┘
```

Fig.7

```
┌─────────────────────────┐
│   Select query image from│
│   among existing images  │
└─────────────────────────┘
            │
            ▼
┌─────────────────────────┐
│ Search with selected query image │
└─────────────────────────┘
            │
            ▼
┌─────────────────────────┐
│   Select one or more similar│
│ images from among search results│
└─────────────────────────┘
            │
            ▼
┌─────────────────────────┐
│    Check keyword satisfying│
│    IncludingRate(K) > Th1 │
└─────────────────────────┘
            │
            ▼
         ◇ One or more
  Yes    keywords K satisfying IncludingRate(K)    No
 ◄────────        > Th1 ?        ─────────►
                                              │
                                              ▼
                              ┌─────────────────────────┐
                              │  Extract feature information│
                              │  weights using selected images│
                              └─────────────────────────┘
                                              │
                                              ▼
┌─────────────────────────┐   ┌─────────────────────────┐
│  Re-search using keyword K│   │   Designate selected image(s)│
└─────────────────────────┘   │    as next query image(s) │
                              └─────────────────────────┘
                                              │
                                              ▼
                              ┌─────────────────────────┐
                              │    Re-search using designated│
                              │ query image and extracted weights│
                              └─────────────────────────┘
            │                                 │
            └────────────┬────────────────────┘
                         ▼
                  ◇ Desired image found ?        No
                              ─────────►
                         │ Yes
                         ▼
              ┌─────────────────────────┐
              │        End search        │
              └─────────────────────────┘
```

Fig.8

```
┌─────────────────────────────┐
│        Enter keyword        │
└─────────────────────────────┘
               │
               ▼
┌─────────────────────────────┐
│      Search with keyword     │
└─────────────────────────────┘
               │
               ▼
┌─────────────────────────────┐
│   Select one or more similar │
│ images from among search results│
└─────────────────────────────┘
               │
               ▼
┌─────────────────────────────┐
│       Extract weights        │
│     using selected images    │
└─────────────────────────────┘
               │
               ▼
┌─────────────────────────────┐
│   Designate selected image(s)│
│     as next query image(s)   │
└─────────────────────────────┘
               │
               ▼
┌─────────────────────────────┐
│ Re-search using designated query│
│   image and extracted weights │
└─────────────────────────────┘
               │
               ▼
          ◇ Desired image found ? ◇ ──── no
               │ yes
               ▼
┌─────────────────────────────┐
│         End search           │
└─────────────────────────────┘
```

Fig.9

```
┌──────────────────────┐              ┌──────────────────────┐
│    Enter keyword     │              │   Create query image │
└──────────┬───────────┘              └──────────┬───────────┘
           │                                     │
           ▼                                     │
┌──────────────────────┐                         │
│  Search with keyword │                         │
└──────────┬───────────┘                         │
           │                                     │
           ▼                                     │
┌──────────────────────┐                         │
│ Extract images having│                         │
│ matching points      │                         │
│ greater than threshold│                        │
│ value as result      │                         │
│ candidates           │                         │
└──────────┬───────────┘                         │
           │                                     │
           │                                     │
           ▼           ▼─────────────────────────┘
┌──────────────────────┐
│ Calculate similarities│
│ between extracted     │
│ result candidates and │
│ created query image   │
└──────────┬───────────┘
           │
           ▼
┌──────────────────────┐
│ Extract search results│
│ in order of descending│
│ similarities          │
└──────────┬───────────┘
           │
           ▼
┌──────────────────────┐
│ Select one or more   │
│ similar images from   │
│ among search results  │
└──────────┬───────────┘
           │
           ▼
┌──────────────────────┐
│  Extract weights using│
│  selected images      │
└──────────┬───────────┘
           │
           ▼
┌──────────────────────┐
│ Designate selected   │
│ image(s) as next      │
│ query image(s)        │
└──────────┬───────────┘
           │
           ▼
┌──────────────────────┐
│ Re-search using      │
│ designated query     │
│ image and extracted  │
│ weights              │
└──────────┬───────────┘
           │
           ▼
      ╱──────────╲        No
     ╱ Desired    ╲──────────
     ╲ image found?╱
      ╲──────────╱
           │ Yes
           ▼
┌──────────────────────┐
│     End search       │
└──────────────────────┘
```

Fig.10

```
┌──────────────────┐          ┌──────────────────┐
│  Enter keyword   │          │ Create query image│
└──────────────────┘          └──────────────────┘
                                        │
                                        ▼
                         ┌────────────────────────────────┐
                         │ Calculate similarities between  │
                         │ extracted result candidates and │
                         │    created query image          │
                         └────────────────────────────────┘
                                        │
                                        ▼
                         ┌────────────────────────────────┐
                         │ Extract images having           │
                         │ similarities greater than       │
                         │ threshold value as search result│
                         │         candidates              │
                         └────────────────────────────────┘

                         ┌────────────────────────────────┐
                         │ Calculate matching points of    │
                         │ search result candidates with   │
                         │        input keyword            │
                         └────────────────────────────────┘
                                        │
                                        ▼
                         ┌────────────────────────────────┐
                         │ Extract search results in order │
                         │ of descending matching points   │
                         └────────────────────────────────┘
                                        │
                                        ▼
                         ┌────────────────────────────────┐
                         │ Select one or more similar      │
                         │ images from among search results│
                         └────────────────────────────────┘
                                        │
                                        ▼
                         ┌────────────────────────────────┐
                         │ Extract weights using selected  │
                         │           images                │
                         └────────────────────────────────┘
                                        │
                                        ▼
                         ┌────────────────────────────────┐
                         │ Designate selected image(s)     │
                         │   as next query image(s)        │
                         └────────────────────────────────┘
                                        │
                                        ▼
                         ┌────────────────────────────────┐
                         │ Re-search using designated query│
                         │ image and extracted weights     │
                         └────────────────────────────────┘
                                        │
                                        ▼
                         ◇ Desired image found ? ◇ ── No
                                        │
                                       Yes
                                        ▼
                         ┌──────────────────┐
                         │   End search     │
                         └──────────────────┘
```

Fig.11

```
┌──────────────────────┐          ┌──────────────────────┐
│    Enter keyword     │          │   Create query image │
└──────────┬───────────┘          └───────────┬──────────┘
           │                                  │
           ▼                                  ▼
┌──────────────────────┐          ┌──────────────────────────┐
│ Search with keyword  │          │ Search with created query image │
└──────────┬───────────┘          └───────────┬──────────────┘
           │                                  │
           └──────────────┬───────────────────┘
                          ▼
        ┌───────────────────────────────────────┐
        │ Calculate final similarity by combining │
        │  keyword matching point and similarity  │
        │            with query image             │
        └──────────────────┬────────────────────┘
                           ▼
        ┌───────────────────────────────────────┐
        │   Select one or more similar images    │◄────┐
        │        from among search results       │     │
        └──────────────────┬────────────────────┘     │
                           ▼                           │
        ┌───────────────────────────────────────┐      │
        │       Extract weights using            │      │
        │          selected images               │      │
        └──────────────────┬────────────────────┘      │
                           ▼                           │
        ┌───────────────────────────────────────┐      │
        │    Designate selected image(s)         │      │
        │       as next query image(s)           │      │
        └──────────────────┬────────────────────┘      │
                           ▼                           │
        ┌───────────────────────────────────────┐      │
        │  Re-search using designated query      │      │
        │    image and extracted weights         │      │
        └──────────────────┬────────────────────┘      │
                           ▼                           │
                  ╱─────────────────╲      No          │
                 ╱  Desired image    ╲─────────────────┘
                 ╲     found ?       ╱
                  ╲─────────────────╱
                           │ Yes
                           ▼
                 ┌──────────────────┐
                 │    End search    │
                 └──────────────────┘
```

Fig.12

User interface(5)

Query image creator(5a)

Query image selector(5b)

Search result window(5c)

Feature information-based searcher(6)

Weight application searcher(7)

Weight extractor(8)

Fig.13

User interface(9)

Keyword query unit(9a)

Query image selector(9b)

Search result window(9c)

Keyword-based searcher(10)

Weight application searcher(11)

Weight extractor(12)

Fig.14

User interface(13)

| Query image creator(13a) | Keyword query unit(13b) | Query image selector(13c) | Search result window(13d) |

Search unit(14)

Feature information-based searcher(14a)

Keyword-based searcher(14b)

Searcher based on combination of query image-based search results and keyword-based search results(14c)

Weight application searcher(15)

Weight extractor(16)